# EUROPÄISCHE PATENTSCHRIFT

(11) **EP 1 330 052 B1**
(45) Veröffentlichungstag und Bekanntmachung des Hinweises auf die Patenterteilung: **02.05.2007**
(21) Anmeldenummer: 02102768.5
(22) Anmeldetag: 16.12.2002
(51) Int. Cl.: H04B 10/08

(54) **Anordnung und Verfahren zur Begrenzung von Übertragungskapazität auf einer Datenübertragungsstrecke**
Arrangement and method for limiting the transmission capacity of a data transmission path
Dispositif et procédé pour limiter la capacité de transmission d'une ligne de transmission de données

(30) Priorität: 21.01.2002 DE 10202143
(43) Veröffentlichungstag der Anmeldung: 23.07.2003
(73) Patentinhaber: SIEMENS AKTIENGESELLSCHAFT, 80333 München (DE)
(72) Erfinder: Rasztovits-Wiech, Michael, Dr., 1170 Wien (AT)

(56) Entgegenhaltungen:
- EP-A- 0 272 911
- US-A- 4 696 063
- US-A- 4 777 663
- US-A- 4 890 893

## Beschreibung

Die Erfindung betrifft eine Anordnung und ein dazugehöriges Verfahren zur Bereitstellung von einer Datenübertragungskapazität auf einer zwischen mindestens einer Sendeeinheit und Empfangseinheit angeordneten Datenübertragungsstrecke.

Telekommunikations-Festnetzbetreiber mit eigenen Übertragungsmedien, wie beispielsweise Glasfaserkabeln, nützen nicht immer alle ihnen zur Verfügung stehenden Übertragungsmedien insbesondere Übertragungsleitungen. Nicht benutzte Übertragungskapazitäten bei Glasfasern können dann beispielsweise an Dritte vermietet werden. Auf einer nicht durch Übertragungseinrichtungen terminierten Glasfaser-Übertragungsstrecke, im folgenden auch als dark fiber genannt, kann beispielsweise eine Übertragungskapazität von 1,6 Tbit/s bei Monomodefasern erreicht werden.

Der Erfindung liegt die Aufgabe zugrunde, eine Anordnung und ein Verfahren gegen den Missbrauch von freien Datenübertragungskapazitäten eines Übertragungsmediums anzugeben.

Die Lösung der Aufgabe ergibt sich aus den Merkmalen der Ansprüche 1 und 7.

Die Erfindung bringt den Vorteil mit sich, dass eine Begrenzung der Datenübertragungskapazität je nach den Erfordernissen eines Mieters erfolgt und dadurch ein leistungsgerechter Mietpreis festsetzbar ist.

Die Erfindung bringt den Vorteil mit sich, dass sie durch einfache Mittel erreichbar ist.

Weitere Besonderheiten sind in den Unteransprüchen angegeben.

Die Anordnung und das Verfahren zur Bereitstellung der Übertragungskapazität werden in einer nachfolgenden näheren Erläuterung anhand eines Ausführungsbeispiels ersichtlich.

Das Ausführungsbeispiel zeigt ein Blockschaltbild einer Glasfaserstrecke mit einer Begrenzereinheit.

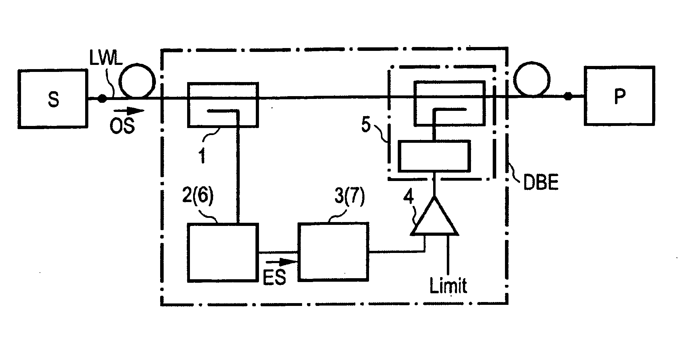

In Figur 1 ist eine Datenübertragungsstrecke, insbesondere eine Glasfaser- bzw. Lichtwellenleiterübertragungsstrecke LWL , zwischen einem Sendeeinheit S und einem Empfangseinheit P dargestellt. Die Datenratenbegrenzereinheit DBE weist in dieser Ausgestaltung einen optischen Koppler 1 der einen Teil des optischen Übertragungssignals OS auskoppelt und einem optischen Empfänger 2 zuführt auf. Dieser optische Empfänger 2 kann als optoelektrischer Konverter ausgebildet sein. Mithilfe des vom optischen Empfänger 2 erzeugten Basisbandsignals ES, wird mit Hilfe eines Bitratenermittlers 3 und eines Komparators 4 entschieden, ob das Übertragungssignal OS mit Hilfe eines Störsignals abgebenden Moduls 5 gestört oder unterbrochen wird. Der Koppler in 5 kann durch einen Schalter ersetzt werden. Der Bitratenermittler 3 kann z.B. als Flankenzähler oder Taktrückgewinnungsschaltung ausgebildet sein. In einer ersten Ausgestaltung wird das elektrische Signal ES direkt an einen Zähler gelegt, der beispielsweise periodisch rücksetzbar ist.

In einer weiteren Ausgestaltung könnte das der Datenrate entsprechende Taktsignal mit Hilfe einer PLL-Schaltung gewonnen werden. Dieses Taktsignal wird dann z.B. einem Zähler zugeführt. Der Zählerstand des Zählers könnte mit Hilfe eines Komperators überwacht werden. Übersteigt der Zählerstand einen vorgebbaren Höchstwert, dann wird die Übertragung auf der Übertragungsstrecke zwischen Sender S und Empfänger P z.B. unterbrochen bzw. derart gestört, das eine sichere fehlerfreie Datenübertragung nicht mehr gewährleistet ist.

Die vom Modul 5 erzeugten Störungen können entweder mittels Einkopplung oder mit Hilfe eines optischen Schalters erreicht werden. Dieser optische Schalter ist in Ruheposition so geschaltet, dass das optische Signal weitergeleitet wird, wobei bei Betriebsspannungsausfall die Übertragungsstrecke nicht unterbrochen wird. Die durch die Störkomponente erzeugten Störungen könnten ebenso mithilfe eines optischen Kopplers erreicht werden, wobei als Störsignalquelle z.B. ein einfacher Laser verwendet werden kann. Die Anordnung bzw. das dazugehörige Verfahren bringt den Vorteil mit sich, dass im Zweig des Übertragungssignals ausschließlich passive optische Komponenten mit geringer Dämpfung verwendet werden, deren Ausfallrate sehr niedrig ist. Eine Überwachung der in die Datenübertragungsleitung eingefügten Schaltungsanordnung kann daher entbehrlich sein.

In einer weiteren Ausgestaltung des gezeigten Ausführungsbeispiels wird Anstelle des verwendeten optischen Empfängers und des Bitratenermittlers ein optischer Spektralanalysator 6 und eine Kanalzahlerfassungseinheit 7 verwendet. Der optische Spektralanalysator wird dabei von einer Kanalzahlerfassungseinheit derart gesteuert, dass die Anzahl der optischen Wellenlängenmultiplexkanäle erfasst werden kann. Liegt die Kanalzahl über einem eingegebenen Limit kann das Übertragungssignal z.B. mithilfe eines optischen Schalters unterbrochen werden. Soll nicht der ganze Übertragungsweg unterbrochen werden, sondern nur die Übertragung von zusätzlichen Kanälen unterbunden bzw. gestört werden kann der optische Schalter auch durch Einkopplung eines wellenlängenselektiven Störsignals, das z.B. mithilfe eines abstimmbaren Laser erzeugt wird, ersetzt werden. Der abstimmbare Laser erzeugt gezielt jene optische Frequenzen der zu störenden zusätzlichen Kanäle.

Der optische Schalter muss im durchgeschalteten Ruhezustand sein, damit bei Betriebsspannungsausfall die Übertragungsstrecke nicht unterbrochen wird.

Der Vorteil auch dieser Ausführungsvariante ist, dass im Zweig des Übertragungssignals ausschließlich passive optische Komponenten mit geringer Dämpfung verwendet werden

## Patentansprüche

1. Anordnung zur Bereitstellung von einer Datenübertragungskapazität auf einer zwischen mindestens einer Sendeeinheit (S) und Empfangseinheit (P) angeordneten Datenübertragungsstrecke,
**dadurch gekennzeichnet,**
**dass** mindestens eine Begrenzungseinheit (DBE) zwischen der Sendeeinheit (S) und der Empfangseinheit (P) angeordnet ist, dass die Begrenzungseinheit (DBE) einen zwischen der Sendeeinheit (S) und der Empfangseinheit (P) ausgetauschten Datenstrom analysiert und die Begrenzungseinheit die Datenübertragungskapazität des Datenstromes benutzerbezogen begrenzt.

2. Anordnung nach Anspruch 1,
**dadurch gekennzeichnet,**
**dass** die Datenübertragungsstrecke durch mindestens eine Glasfaserleitung (LWL) gebildet ist.

3. Anordnung nach Anspruch 2,
**dadurch gekennzeichnet,**
**dass** die Begrenzungseinheit (DBE)
eine erste Koppeleinheit zur Auskopplung eines Teils des auf der Glasfaserleitung geführten optischen Übertragungssignals (OS),
einen optischen Empfänger (2) zur Umsetzung des optischen Übertragungssignals in ein elektrisches Übertragungssignal (ES),
einen Bitratenermittler (3) zur Erfassung der Bitrate und einen Komparator der die Bitrate mit einem vorgebaren Bitrate vergleicht umfasst, wobei je nach Ausgangssignal des Komparators (4) das optische Übertragungssignal (OS) durch Mittel die im Modul (5) angeordnet sind und damit in Abhängigkeit der Bitrate des optischen Übertragungssignals beeinflussbar ist.

4. Anordnung nach Anspruch 3,
**dadurch gekennzeichnet,**
**dass** der Bitratenermittler (3) ein Flankenzähler ist

5. Anordnung nach Anspruch 3,
**dadurch gekennzeichnet,**
**dass** der Bitratenermittler (3) eine Taktrückgewinnungsschaltung ist.

6. Anordnung nach Anspruch 2,
**dadurch gekennzeichnet,**
**dass** die Begrenzungseinheit (DBE) eine
erste Koppeleinheit, einen Spektalanaysator sowie eine Vergleichereinheit umfasst, wobei die Koppeleinheit Teile des des auf der Glasfaserleitung geführten optischen Übertragungssignals (OS) auskoppelt und dem optischen Spektralanalysator zuführt, die Anzahl der übertragenen Wellenlängenmultiplexkanäle ermittelt und bei Überschreiten eines Wertes in einem Vergleicher das optische Übertragungssignal (OS) in Abhängigkeit der Bitrate des optischen Übertragungssignals beeinflusst wird.

7. Verfahren zur Bereitstellung von einer Datenübertragungskapazität auf einer zwischen mindestens einer Sendeeinheit (S) und Empfangseinheit (P) angeordneten Datenübertragungsstrecke,
**dadurch gekennzeichnet, dass** mindestens eine Begrenzungseinheit (DBE) zwischen der Sendeeinheit(s) und der Empfangseinheit (P) angeordnet wird, die einen zwischen der Sendeeinheit (s) und der Empfangseinheit (P) ausgetauschten Datenstrom analysiert, und
dass die Datenübertragungskapazität des auf der Datenübertragungsstrecke ausgetauschten Datenstromes benutzerbezogen begrenzt wird.

8. Verfahren nach Anspruch 7,
**dadurch gekennzeichnet,**
**dass** das Übertragungssignal ein optisches ist und ein Teil des auf dem Glasfaserkabel geführten optischen Übertragungssignals (OS) ausgekoppelt wird,
**dass** das ausgekoppelte optische Übertragungssignal in ein elektrisches Übertragungssignal (ES) umgesetzt wird,
**dass** die Bitrate erfasst und mit einer vorgebbaren Bitrate verglichen wird und entsprechend der Differenz das optische Übertragungssignal in Abhängigkeit der Bitrate des optischen Übertragungssignals beeinflussbar ist.

9. Verfahren nach Anspruch 7,
**dadurch gekennzeichnet,**
**dass** Teile des auf der Glasfaserleitung geführten optischen Übertragungssignals (OS) ausgekoppelt,
**dass** die Anzahl der übertragenen Wellenlängenmultiplexkanäle ermittelt werden und
**dass** bei Überschreiten eines vorgebaren Wertes das optische Übertragungssignal (OS) beeinflusst wird.

## Claims

1. Arrangement for providing a data transmission capacity on a data transmission path which is arranged between at least one transmitting unit (S) and one receiving unit (P),
**characterized**
**in that** at least one limiting unit (DBE) is arranged between the transmitting unit (S) and the receiving unit (P), in that the limiting unit (DBE) analyzes a data stream which is interchanged between the transmitting unit (S) and the receiving unit (P), and the limiting unit limits the data transmission capacity of the data stream on a user-related basis.

2. Arrangement according to claim 1,
**characterized**
**in that** the data transmission path is formed by at least one glass fiber line (LWL).

3. Arrangement according to claim 2,
**characterized**
**in that** the limiting unit (DBE) comprises
a first coupling unit for outputting a part of the optical transmission signal (OS) which is carried on the glass fiber line,
an optical receiver (2) for converting the optical transmission signal to an electrical transmission signal (ES),
a bit rate determining device (3) for detecting the bit rate, and
a comparator which compares the bit rate with a bit rate which can be predetermined, in which case, depending on the output signal from the comparator (4), the optical transmission signal (OS) can be influenced by means which are arranged in the module (5) and hence as a function of the bit rate of the optical transmission signal.

4. Arrangement according to claim 3,
**characterized**
**in that** the bit rate determining device (3) is an edge counter.

5. Arrangement according to claim 1,
**characterized**
**in that** the bit rate determining device (3) is a clock recovery circuit.

6. Arrangement according to claim 2,
**characterized**
**in that** the limiting unit (DBE) comprises a first coupling unit, a spectrum analyzer and a comparator unit, with the coupling unit outputting parts of the optical transmission signal (OS) which is carried on the glass fiber line and supplying them to the optical spectrum analyzer, determining the number of the transmitted wavelength multiplexed channels and, if a value in a comparator is exceeded, influencing the optical transmission signal (OS) as a function of the bit rate of the optical transmission signal.

7. Method for providing a data transmission capacity on a data transmission path which is arranged between at least one transmitting unit (S) and one receiving unit (P),
**characterized**
**in that** at least one limiting unit (DBE) is arranged between the transmitting unit (S) and the receiving unit (P), analyses a data stream which is interchanged between the transmitting unit (S) and receiving unit (P), and the data transmission capacity of the data stream which is interchanged on the data transmission path is limited on a user-related basis.

8. Method according to claim 7,
**characterized**
**in that** the transmission signal is an optical signal and a part of the optical transmission signal (OS) which is carried on the glass fiber cable is output,
**in that** the output optical transmission signal is converted to an electrical transmission signal (ES),
**in that** the bit rate is detected and compared with a bit rate which can be predetermined, and the optical transmission signal can be influenced in accordance with the difference, as a function of the bit rate of the optical transmission signal.

9. Arrangement according to claim 7,
**characterized**
**in that** parts of the optical transmission signal (OS) which are carried on the glass fiber line are output,
**in that** the number of the transmitted wavelength multiplexer channels is determined,
and **in that** the optical transmission signal (OS) is influenced if a value which can be predetermined is exceeded.

## Revendications

1. Dispositif pour mettre à disposition une capacité de transmission sur un tronçon de transmission de données disposé entre au moins une unité d'émission (S) et une unité de réception (P), **caractérisé en ce que** au moins une unité de limitation (DBE) est disposée entre l'unité d'émission (S) et l'unité de réception (P), **en ce que** l'unité de limitation (DBE) analyse un flux de données échangé entre l'unité d'émission (S) et l'unité de réception (P) et l'unité de limitation limite la capacité de transmission de données du flux de données de façon spécifique à l'utilisateur.

2. Dispositif selon la revendication 1, **caractérisé en ce que** le tronçon de transmission de données est formé par au moins une ligne en fibre de verre (LWL)

3. Dispositif selon la revendication 2, **caractérisé en ce que** l'unité de limitation (DBE) comprend une première unité de couplage pour la dissociation d'une partie du signal de transmission (OS) optique guidé sur la ligne en fibre de verre, un récepteur (2) optique pour la conversion du signal de transmission optique en un signal de transmission électrique (ES), un calculateur de débit binaire (3) pour la détection du débit binaire et un comparateur qui compare le débit binaire à un débit binaire prédéfinissable, le signal de transmission optique (OS) pouvant être influencé, selon le signal de sortie du comparateur (4), par des moyens qui sont disposés dans le module (5) et donc en fonction du débit binaire du signal de transmission optique.

4. Dispositif selon la revendication 3, **caractérisé en ce que** le calculateur de débit binaire (3) est un compteur d'un compteur de flancs.

5. Dispositif selon la revendication 3, **caractérisé en ce que** le calculateur de débit binaire (3) est un circuit de récupération de rythme.

6. Dispositif selon la revendication 2, **caractérisé en ce que** l'unité de limitation (DBE) comprend une première unité de couplage, un analyseur spectral et une unité de comparaison, l'unité de couplage dissociant des parties du signal de transmission (OS) optique guidé sur la ligne en fibre de verre et l'amenant à l'analyseur spectral optique, déterminant le nombre des canaux de multiplexage de longueur d'onde transmis et le signal de transmission (OS) optique étant influencé, en cas de dépassement d'une valeur dans un comparateur, en fonction du débit binaire du signal de transmission optique.

7. Procédé pour mettre à disposition une capacité de transmission de données sur un tronçon de transmission de données disposé entre au moins une unité d'émission (OS) et une unité de réception (P), **caractérisé en ce qu'**au moins une unité de limitation (DBE) est disposée entre l'unité d'émission (S) et l'unité de réception (P), qui analyse un flux de données échangé entre l'unité d'émission (S) et l'unité de réception (P), et **en ce que** la capacité de transmission du flux de données échangé sur le tronçon de transmission de données est limitée de façon spécifique à l'utilisateur.

8. Procédé selon la revendication 7, **caractérisé en ce que** le signal de transmission est un signal optique et une partie du signal de transmission (OS) optique guidé sur le câble de fibre de verre est dissociée, **en ce que**, le signal de transmission optique dissocié est converti en un signal de transmission (ES) électrique, **en ce que** le taux binaire est détecté et comparé avec un débit binaire prédéfinissable et, en fonction de la différence, le signal de transmission optique peut être influencé en fonction du débit binaire du signal de transmission optique.

9. Procédé selon la revendication 7, **caractérisé en ce que** des parties du signal de transmission optique (OS) guidé sur la ligne en fibre de verre sont dissociées, **en ce que** le nombre des canaux de multiplexage de longueur d'onde transmis est déterminé et **en ce que** le signal de transmission optique (OS) est influencé en cas de dépassement d'une valeur prédéfinissable.
